# EUROPEAN PATENT APPLICATION

(11) **EP 2 314 546 A1**
(43) Date of publication of application: **27.04.2011**
(21) Application number: 09804647.7
(22) Date of filing: 08.01.2009
(51) Int. Cl.: C02F 1/469, B01D 61/48, C02F 1/46, C02F 5/00, C02F 5/08, F24H 1/00

(54) **DEMINERALIZER AND HOT WATER SUPPLY APPARATUS PROVIDED WITH THE SAME**

(30) Priority: 07.08.2008 JP 2008204004; 10.09.2008 JP 2008231734
(71) Applicant: Panasonic Corporation, Kadoma-shi Osaka 571-8501 (JP)
(72) Inventor: Keiko Yasui, Osaka 540-6207 (JP); Takemi Oketa, Osaka 540-6207 (JP); Taisuke Horiki, Osaka 540-6207 (JP); Shigeru Sasabe, Osaka 540-6207 (JP)
(74) Representative: Eisenführ, Speiser & Partner
(86) International application number: PCT/JP2009/000035
(87) International publication number: WO 2010/016160

(57) **Abstract**

A demineralizer 47 comprising: an electrodialysis section 2 including an anode chamber 8 having an anode 7, a cathode chamber 10 having a cathode 9, and a soft water chamber 5 which separates the anode chamber 8 and the cathode chamber 10 from each other by means of a cation-exchange membrane 3 (diaphragm) and an anion-exchange membrane 4 and into which ion exchanger 11 is charged for obtaining soft water by the ion exchanger 11; an anode water circulation channel 20 including a water storage section 19 in which anode water is stored and an anode water circulation pump 18, the anode water circulation channel 20 circulating anode water concentrated in the anode chamber 8 by energizing the anode 7; and a cathode water circulation channel 25 including a cathode water circulation pump 23 and a deposition/removal section 24 for depositing hardness components in the cathode water thereon to remove the hardness components, the cathode water circulation channel 25 circulating the cathode water concentrated in the cathode chamber 10 by energizing the cathode 9. Cathode water concentrated in the cathode chamber 10 is circulated by the cathode water circulation pump 23, hardness components included in the cathode water are removed by the deposition/removal section 24, and it is possible to prevent a diaphragm from being clogged with the hardness components.

## Description

### Technical Field

The present invention relates to a demineralizer that does not require supply of chemicals and that continuously supplies soft water, and to a hot water supply apparatus using the demineralizer.

### Background Technique

Many apparatuses such as one using an ion exchange resin or one using electrodialysis are proposed as demineralizers. For example, there is known an apparatus that can obtain soft water by exchanging calcium ions or magnesium ions that are hardness components included in raw water to sodium ions using a cation exchange resin having sodium ions as an exchange group.

After all of sodium ions that are exchange groups of a cation exchange resin are exchanged to calcium ions or magnesium ions, ion exchange can not be carried out. Therefore, the cation exchange resin is regenerated so that ion exchange can be carried out again. Salt is used for regenerating the cation exchange resin. However, it is necessary to replenish the salt periodically in accordance with an amount of soft water used, and it is troublesome to replenish the salt.

As a regenerating method of a cation exchange resin using no chemicals such as salt, there are proposed a method for regenerating a cation exchange resin by acid water obtained using a diaphragm (see patent document 1 for example), and a method for placing an ion exchange resin between electrodes of electrodialysis, and efficiently regenerating the cation exchange resin by hydrogen ions produced by dissociation of water (see patent document 2 for example).
[Patent Document 1] Japanese Patent Application Laid-open No.H7-68256
[Patent Document 2] Japanese Patent Application Laid-open No.2006-43549

### Disclosure of the Invention

According to the method for regenerating the cation exchange resin using the diaphragm, if a flow rte of concentrated water is reduced, hardness components are deposited on the concentrating section. Therefore, there is a problem that a blockage of the diaphragm occurs. According to the method for regenerating the cation exchange resin using hydrogen ion produced by dissociation of water also, if an amount of water used for regeneration is reduced, the hardness components are concentrated in a concentrating chamber. As a result, since the diaphragm is clogged, there is a problem that maintenance is required.

Therefore, it is an object of the present invention to provide a demineralizer capable of preventing a diaphragm from being clogged with hardness components, and to provide a hot water supply apparatus having the demineralizer.

A first aspect of the present invention provides a demineralizer comprising: an electrodialysis section including an anode chamber having an anode, a cathode chamber having a cathode, and a soft water chamber which separates the anode chamber and the cathode chamber from each other by means of a diaphragm and into which ion exchanger is charged for obtaining soft water by the ion exchanger; an anode water circulation channel including a water storage section in which anode water is stored and an anode water circulation pump, and the anode water circulation channel circulating the anode water concentrated in the anode chamber by energizing the anode; and a cathode water circulation channel including a cathode water circulation pump and a deposition/removal section for depositing hardness components in the cathode water thereon to remove the hardness components, and the cathode water circulation channel circulating the cathode water concentrated in the cathode chamber by energizing the cathode.

According to a second aspect of the invention, in the first aspect, the deposition/removal section includes reversely-water flowing means for circulating water reversely, and a filtering material charged into the deposition/removal section is stirred and washed when water flows reversely.

According to a third aspect of the invention, in the second aspect, when the filtering material is stirred and washed, the filtering material is washed with the anode water in the water storage section.

According to a fourth aspect of the invention, in the first aspect, an anion exchanger is charged into the soft water chamber on a side of the anode chamber and a cation exchanger is charged into the soft water chamber on a side of the cathode chamber in a state where the anion exchanger and the cation exchanger are separated from each other.

According to a fifth aspect of the invention, in the first aspect, the ion exchanger is woven fabric, nonwoven fabric or processed goods thereof having an ion exchange group.

According to a sixth aspect of the invention, in the first aspect, the ion exchanger is formed into nonwoven fabric made of fiber having an ion exchange group and conductive fiber.

According to a seventh aspect of the invention, in the first aspect, the deposition/removal section includes filter means and deposition accelerating means of hardness components.

According to an eighth aspect of the invention, in the first aspect, the deposition/removal section includes hardness component depositing section, and the hardness components are deposited on the hardness component depositing section.

A ninth aspect of the invention provides hot water supply apparatus having the demineralizer according to any one of first to eighth aspects.

According to the demineralizer of the present invention, cathode water including hardness components generated at the time of regeneration is circulated by a circulation water pump, the hardness components included in the cathode water are removed by the deposition/removal section, whereby the diaphragm is prevented from being clogged. Since the cathode water is circulated, the cathode water is utilized repeatedly. Therefore, an amount of water used fro regeneration can be reduced, and soft water can be obtained without the maintenance.

### Brief Description of the Drawings

Fig. 1 is a diagram showing a configuration of a demineralizer according to a first embodiment of the present invention;
Fig. 2 is a diagram showing a configuration of an electrodialysis section of a demineralizer according to a second embodiment of the invention;
Fig. 3 is a diagram showing a configuration of a demineralizer according to a third embodiment of the invention;
Fig. 4 is a diagram showing a configuration of a demineralizer according to a fourth embodiment of the invention; and
Fig. 5 is a diagram showing a configuration of a hot water supply apparatus having a demineralizer according to a fifth embodiment of the invention.

### [Explanation of Symbols]

- 1: feedwater path
- 2: electrodialysis section
- 3: cation-exchange membrane (diaphragm)
- 4: anion-exchange membrane
- 5: soft water chamber
- 6: spacer
- 7: anode
- 8: anode chamber
- 9: cathode
- 10: cathode chamber
- 11: ion exchanger
- 12: feedwater switching valve
- 13: soft water chamber inlet
- 14: soft water chamber outlet
- 15: soft water using device
- 16: anode chamber inlet
- 17: anode chamber outlet
- 18: anode water circulation pump
- 19: water storage section
- 20: anode water circulation channel
- 21: cathode chamber inlet
- 22: cathode chamber outlet
- 23: cathode water circulation pump
- 24: deposition/removal section
- 25: cathode water circulation channel
- 26: body
- 27: filtering material
- 28: filter
- 29: support plate
- 30: drain valve
- 31: drain path
- 32: washing-switching valve
- 33: cation exchanger
- 34: anion exchanger
- 36: hot water tank
- 37: heat exchanger
- 38: heat pump unit
- 39: heat exchanger feedwater path
- 40: hot water tank feedwater path
- 41: hot water supply circuit
- 42: hot water delivering circuit
- 43: refrigerant circuit
- 44: evaporator
- 45: compression means
- 46: expansion means
- 47: demineralizer
- 48: circulation pump
- 49: alkaline elution agent
- 50: deposition electrode
- 51: counter electrode
- 52: reference electrode
- 53: cathode water inlet
- 54: cathode water outlet
- 55: bottom portion

### Best Mode for Carrying Out the Invention

The demineralizer of the first aspect of the invention comprises: an electrodialysis section including an anode chamber having an anode, a cathode chamber having a cathode, and a soft water chamber which separates the anode chamber and the cathode chamber from each other by means of a diaphragm and into which ion exchanger is charged for obtaining soft water by the ion exchanger; an anode water circulation channel including a water storage section in which anode water is stored and an anode water circulation pump, and the anode water circulation channel circulating the anode water concentrated in the anode chamber by energizing the anode; and a cathode water circulation channel including a cathode water circulation pump and a deposition/removal section for depositing hardness components in the cathode water thereon to remove the hardness components, and the cathode water circulation channel circulating the cathode water concentrated in the cathode chamber by energizing the cathode. According to this aspect, soft water is obtained by the ion exchanger charged into the soft water chamber, electricity is supplied between the electrodes of the anode chamber and the cathode chamber at the time of regeneration of the ion exchanger, and the ion exchanger is regenerated by dissociation of water that occurs by the energization. By circulating cathode water concentrated in the cathode chamber at the time of the regeneration, cation such as calcium and magnesium separated from the ion exchanger is introduced into the deposition/removal section from the cathode chamber, and it is removed as hardness components by the deposition/removal section. Therefore, it is possible to prevent the diaphragm from being clogged with the hardness components of the demineralizer. Maintenance is unnecessary, and it is possible to obtain soft water continuously. Since the cathode water is repeatedly utilized, an amount of water used for regeneration can be reduced.

According to the second aspect of the invention, in the demineralizer of the first aspect, the deposition/removal section includes reversely-water flowing means for circulating water reversely, and a filtering material charged into the deposition/removal section is stirred and washed when water flows reversely. With this aspect, hardness components trapped by the filtering material by reversely flowing water can be washed out from the filtering material. Therefore, it is possible to prevent the filtering material from being clogged, and stable filtering performance can be obtained.

According to the third aspect of the invention, in the demineralizer of the second aspect, when the filtering material is stirred and washed, the filtering material is washed with the anode water in the water storage section. With this aspect, since hardness components that adhere to the filtering material can be dissolved and washed with acid water in the water storage section, it is possible to prevent the filtering material from being clogged and to obtain stable filtering performance.

According to the fourth aspect of the invention, in the demineralizer of the first aspect, an anion exchanger is charged into the soft water chamber on a side of the anode chamber and a cation exchanger is charged into the soft water chamber on a side of the cathode chamber in a state where the anion exchanger and the cation exchanger are separated from each other. With this aspect, movement of the anion such as chlorine ion and carbonate ion separated from the anion exchanger to the anode chamber, and movement of cation such as calcium and magnesium separated from the cation-exchange membrane to the cathode chamber at the time of regeneration are not hindered, and the ion exchanger can be regenerated efficiently.

According to the fifth aspect of the invention, in the demineralizer of the first aspect, the ion exchanger is woven fabric, nonwoven fabric or processed goods thereof having an ion exchange group. With this aspect, since the woven fabric or the nonwoven fabric is used as the ion exchangers, it is possible to uniformly charge the ion exchangers into the soft water chamber.

According to the sixth aspect of the invention, in the demineralizer of the first aspect, the ion exchanger is formed into nonwoven fabric made of fiber having an ion exchange group and conductive fiber. With this aspect, since conductive fiber is mixed, electrical resistance in the soft water chamber can be lowered, and power consumption can be reduced.

According to the seventh aspect of the invention, in the demineralizer of the first aspect, the deposition/removal section includes filter means and deposition accelerating means of hardness components. With this aspect, deposition of the hardness components in the cathode water is accelerated, and hardness components deposited by the filter means can be removed.

According to the eighth aspect of the invention, in the demineralizer of the first aspect, the deposition/removal section includes hardness component depositing section, and the hardness components are deposited on the hardness component depositing section. With this aspect, hardness components are deposited on the hardness component depositing section, and hardness components in the cathode water can be removed.

The ninth aspect of the invention provides a hot water supply apparatus having the demineralizer according to any one of the first to eighth aspects. With this aspect, since the hot water supply apparatus includes the demineralizer, it is possible to prevent scale formed on a heat-transferring surface of the hot water supply heat exchanger from generating. With this, it is possible to prevent the water circuit of the heat exchanger from being clogged, and to enhance the heat exchanging efficiency.

### [First Embodiment]

Embodiments of the present invention will be described with reference to the drawings. In the embodiments, members having the same configurations and the same motion are designated with the same symbols, and redundant explanation will be omitted. The invention is not limited to the embodiments.

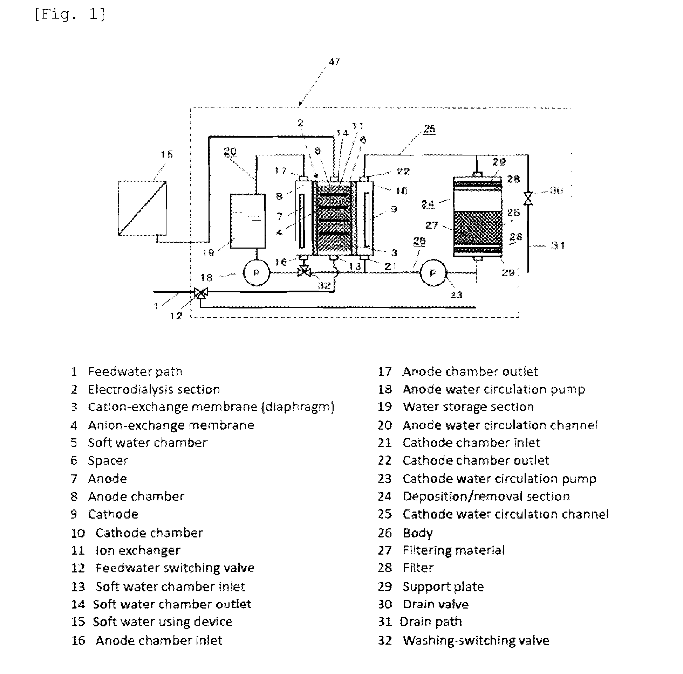

Fig. 1 is a diagram showing a configuration of a demineralizer according to a first embodiment of the invention.

In Fig. 1, the demineralizer 47 has the following configuration.

An electrodialysis section 2 softens water from a feedwater path 1 by an ion exchange effect, and dissociates the water by electrodialysis. The electrodialysis section 2 includes a soft water chamber 5 separated by a cation-exchange membrane (diaphragm) 3 and an anion-exchange membrane 4, an anode chamber 8 having an anode 7, and a cathode chamber 10 having a cathode 9. The soft water chamber 5 includes spacers 6 forming a path in the soft water chamber 5 into a meandering shape. An ion exchanger 11 having a cation exchange resin and an anion exchange resin is charged into the soft water chamber 5.

The feedwater path 1 is connected to a soft water chamber inlet 13 provided in the soft water chamber 5 through a feedwater switching valve 12. A soft water chamber outlet 14 provided in the soft water chamber 5 is connected to a soft water using device 15 that uses soft water. Filters (not shown) for preventing ion exchanger 11 charged into the soft water chamber 5 from flowing out are provided in the soft water chamber inlet 13 and the soft water chamber outlet 14.

Sintered precious metal electrodes, or electrodes that are made of titanium as base material and plated with precious metal such as platinum and iridium are used as the anode 7 and the cathode 9. Examples of shapes of the electrodes are flat plate, mesh and punching. If a predetermined electrode area can be secured, the shapes of the electrodes are not limited.

Direct voltage is applied between the anode 7 and the cathode 9 by a direct-current power supply (not shown).

The anode chamber 8 includes an anode chamber inlet 16 and an anode chamber outlet 17. The anode chamber inlet 16 and the anode chamber outlet 17 are connected to an anode water circulation channel 20 through an anode water circulation pump 18 and a water storage section 19. The cathode chamber 10 includes a cathode chamber inlet 21 and a cathode chamber outlet 22. The cathode chamber inlet 21 and the cathode chamber outlet 22 are connected to a cathode water circulation channel 25 through a cathode water circulation pump 23 and a deposition/removal section 24.

The deposition/removal section 24 includes a cylindrical body 26, granular filtering material 27, filters 28 provided in an upper portion and a lower portion in the body 26 for preventing the filtering material 27 therein from leaking out, and support plates 29 supporting the filters 28. An upper portion of the deposition/removal section 24 is connected to the cathode chamber outlet 22 through the cathode water circulation channel 25, and is connected to a drain path 31 through a drain valve 30. The cathode water circulation channel 25 is connected to the anode water circulation channel 20 through a washing-switching valve 32.

A lower portion of the deposition/removal section 24 is connected to the cathode chamber inlet 21 through the cathode water circulation channel 25, and is connected to the feedwater path 1 through the feedwater switching valve 12. The demineralizer 47 includes a direct-current power supply, the feedwater switching valve 12, the anode water circulation pump 18, the cathode water circulation pump 23, the drain valve 30 and control means (not shown) for controlling operations of these members.

The operation and effect of the demineralizer having the above-described configuration will be described.

When soft water is used using the soft water using device 15, water from the feedwater path 1 is supplied to the soft water chamber inlet 13 of the electrodialysis section 2 through the feedwater switching valve 12. Since this water flows in the soft water chamber 5 in a snaking manner by the spacers 6, contact time of the water with the ion exchanger 11 can be increased. Cation such as sodium and calcium is exchanged for hydrogen ion by the ion exchanger 11, and anion such as carbonate ion and chlorine ion is exchanged for hydroxide ion by the ion exchanger 11, and soft water is produced in the soft water chamber 5. Soft water produced in this manner is supplied to the soft water using device 15.

As the ion exchanger 11, it is possible to use a mixture of a cation exchanger having a functional group for exchanging cation such as a strong acid cation exchange resin and a weak acid cation exchange resin, and an anion exchanger having a functional group for exchanging anion such as a strong basic anion exchange resin and a weak basic ion exchange resin. The functional group is not limited only if the ion exchanger can be regenerated by hydrogen ion and hydroxide ion produced by dissociation. If easiness of regenerating operation is taken into consideration, a combination of the weak acid cation exchange resin and the weak basic anion exchange resin is preferable.

Examples of the soft water using device 15 are a washing machine such as a washer and a dishwasher, a cocker, a steam using device having a problem of scale deposition, and a cosmetic device. If the washing machine uses soft water from which hardness components that impairs the functioning of a surface-active agent are removed, the washing ability is enhanced, and production of soap residue (detergent residue) caused by the hardness components is suppressed. Therefore, stiff feeling of clothes and a remainder of water drop can be avoided, and finished clothes and the like can be of high quality.

When soft water is used for a cocker such as a rice cooker, water absorption ability of rice can be enhanced, off-balance of collapse of rice or hardness balance is improved, and taste of rice can be enhanced by the effect of the soft water. Further, since soft water stimulates extraction of delicious taste ingredient (amino acid) such as tangle, if cocking is carried out using material that is suitable for soft water, taste of food can be enhanced.

Next, effect when the ion exchanger 11 is regenerated will be described.

When the ion exchanger 11 is regenerated, direct voltage is applied between the anode 7 and the cathode 9. With this application of direct voltage, dissociation of water occurs in the ion exchanger 11 and at the contact interface between the cation-exchange membrane (diaphragm) 3 and the anion-exchange membrane 4 of the ion exchanger 11. Concentrations of the hydrogen ion and hydroxide ion produced by the dissociation of water are locally increased in the ion exchanger 11 and at the contact interface. Cation such as calcium and anion such as carbonate ion and chlorine ion that adsorb the ion exchanger 11 are exchanged for hydrogen ion and hydroxide ion, and the ion exchanger 11 is regenerated.

At that time, cation such as calcium separated from the ion exchanger 11 is pulled toward the cathode 9, and the cation moves to the cathode chamber 10 through the cation-exchange membrane (diaphragm) 3. At the same time, anion such as carbonate ion and chlorine ion is pulled toward the anode 7, and the anion moves to the anode chamber 8 through the anion-exchange membrane 4. Cathode water that was concentrated in the cathode chamber 10 is sent to the deposition/removal section 24 by the cathode water circulation pump 23. Hardness components in the cathode water that were sent to the deposition/removal section 24 are alkalified, and they can easily be deposited as calcium carbonate. The deposited calcium carbonate can be filtered and removed by the filtering material 27.

Anode water that was concentrated in the anode chamber 8 is sent to the water storage section 19 by the anode water circulation pump 18, and acidic anode water is stored in the water storage section 19.

As described above, according to the demineralizer 47 of the embodiment, cathode water that was concentrated in the cathode chamber 10 of the electrodialysis section 2 is circulated by the cathode water circulation pump 23, hardness components in the cathode water are removed by the deposition/removal section 24, and it is possible to prevent the cation-exchange membrane (diaphragm) 3 from being clogged. By circulating and utilizing the cathode water repeatedly, an amount of water used for regeneration can be reduced.

In this embodiment, the ion exchanger 11 is charged into the soft water chamber 5 and soft water is refined by the ion exchange effect, but the same effect can also be obtained by refining soft water by electrodialysis effect without charging the ion exchanger 11 into the soft water chamber 5. That is, by removing, by the deposition/removal section 24, hardness components in concentrated water concentrated by the cathode chamber 10, it is possible to prevent the cation-exchange membrane (diaphragm) 3 from being clogged. By repeatedly utilizing the concentrated water, it is possible to reduce the amount of water used for regeneration.

When soft water is obtained by ion exchange effect of the ion exchanger 11, it is possible to enhance the processing speed as compared with a case where soft water is obtained by the electrodialysis.

Stopping time of the soft water using device 15 can be allocated to the regenerating time of the ion exchanger 11. With this configuration, it is possible to reduce the applied voltage and a current value, and to reduce the surface area of the electrode. Further, precious metal such as platinum and iridium that is sintered or plated on the surface of the electrode can be thinned, and an amount of expensive precious metal material used can be reduced.

Next, operation at the time of reverse washing operation of the filtering material 27 will be described.

The reverse washing operation includes a manual washing operation that is freely carried out by a user, and an automatic washing operation that is carried out at regular intervals. The frequency and timing of the washing operation differ depending upon a machine to be used.

In this embodiment, the manual washing operation that is freely carried out by a user will be described. As timing of the washing operation, various timings can be employed, i.e., a method for determining the washing timing by detecting a pressure loss of the deposition/removal section 24, a method for determining the washing timing by detecting reduction of a flow rate of water flowing through the cathode water circulation channel 25, a method for carrying out the washing operation when a predetermined amount of water flows or when predetermined time of water flow is elapsed, and a method for carrying out the washing operation at regular intervals irrespective of a using state. The same effect as that of the embodiment can be obtained irrespective of the timings.

At the time of the reverse washing operation of the filtering material 27, the feedwater switching valve 12 is switched by the control means such that the feedwater path 1 and the lower portion of the deposition/removal section 24 are connected to each other. At the same time, the washing-switching valve 32 is switched such that the anode water circulation channel 20 and the cathode water circulation channel 25 are connected to each other. The drain valve 30 is opened.

Water from the feedwater path 1 is supplied to the filtering material 27 from the lower portion of the deposition/removal section 24 through the feedwater switching valve 12, the filtering material 27 is washed and hardness components are removed. The washed out hardness components are drained from the drain path 31. Anode water in the water storage section 19 is supplied to the filtering material 27 from the lower portion of the deposition/removal section 24, and hardness components that were added to the filtering material 27 are dissolved and removed. The dissolved and removed hardness components are discharged from the drain path 31.

As described above, the demineralizer 47 of the embodiment includes reversely-water flowing means that flows water to the deposition/removal section 24 in a reverse circulating direction. According to this configuration, the filtering material 27 can be stirred and washed. Hardness components removed from the filtering material 27 by the washing operation can be discharged out from the deposition/removal section 24, and it is possible to prevent the filtering material 27 from being clogged.

By washing the filtering material 27 with anode water stored in the water storage section 19, the deposited hardness components can be dissolved. By discharging the dissolved hardness components out from the deposition/removal section 24, it is possible to prevent the filtering material from being clogged, and stable filtering ability can be obtained.

In this embodiment, the granular filtering material 27 is used as the filter means. However, the same effect as that of the embodiment can also be obtained even if a ceramic or polymeric metal flat membrane, a pleat membrane, or a hollow-fiber membrane is used as the filter means only if such a membrane can remove the deposited hardness components, and the hardness components can be washed by reversely flowing water.

### [Second Embodiment]

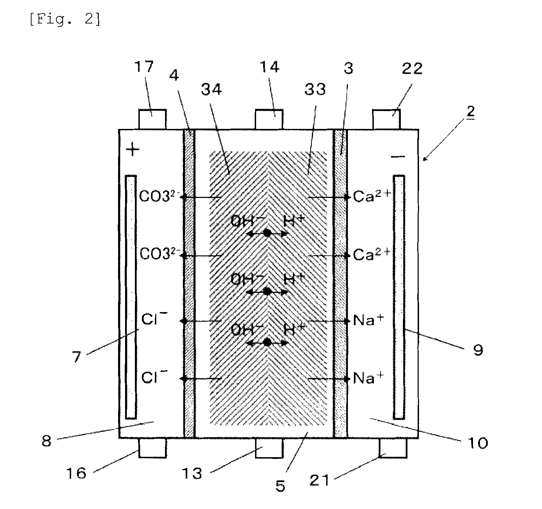

Fig. 2 is a diagram showing a configuration of an electrodialysis section of a demineralizer according to a second embodiment of the invention.

The electrodialysis section 2 of the second embodiment is different from that of the first embodiment in that the ion exchanger 11 is charged into the soft water chamber 5 in a separated state. That is, cation exchanger 33 and anion exchanger 34 comprising nonwoven fabric having ion exchange group are separated from each other and charged into the soft water chamber 5.

The operation of the above-described configuration at the time of regeneration will be described.

If direct voltage is applied between the anode 7 and the cathode 9, dissociation of water occurs on the contact interface between the cation exchanger 33 and the anion exchanger 34. The hydrogen ion and the hydroxide ion produced by the water dissociation are locally concentrated in the respective ion exchangers. Cation such s calcium adsorbed by the cation exchanger 33 and anion such as carbonate ion and chlorine ion adsorbed by the anion exchanger 34 are respectively exchanged for hydrogen ion and the hydroxide ion. The cation exchanger 33 and the anion exchanger 34 are regenerated by this ion exchange.

The cation such as calcium and sodium separated from the cation exchanger 33 is pulled toward the cathode 9, and move to the cathode chamber 10 through the cation-exchange membrane (diaphragm) 3. At the same time, anion such as carbonate ion and chlorine ion separated from the anion exchanger 34 is pulled toward the anode 7, and the anion moves to the anode chamber 8 through the anion-exchange membrane 4.

At this time, since the cation exchanger 33 and the anion exchanger 34 are charged into the soft water chamber 5 in the separated state, anion such as chlorine ion and carbonate ion separated from the anion exchanger 34 can smoothly move to the anode chamber 8, and cation such as calcium and sodium separated from the cation exchanger 33 can smoothly move to the cathode chamber 10.

As described above, according to the electrodialysis section 2 of the demineralizer 47 of the second embodiment, the anion exchanger 34 is charged into the soft water chamber 5 on the side of the anode chamber 8 and the cation exchanger 33 is charged into the soft water chamber 5 on the side of the cathode chamber 10 in the separated state. Therefore, cation and anion smoothly move, and regeneration of the ion exchanger can efficiently be carried out.

Granular, woven fabric, nonwoven fabric or processed goods thereof can be used as the ion exchanger. If the ion exchanger is formed as fiber products of woven fabric or nonwoven fabric, the ion exchangers can be charged into the soft water chamber 5 uniformly, and it is easy to process the ion exchangers.

By mixing conductive fiber into the ion exchanger, it is possible to lower the electrical resistance in the soft water chamber 5, and to lower power consumption.

### [Third Embodiment]

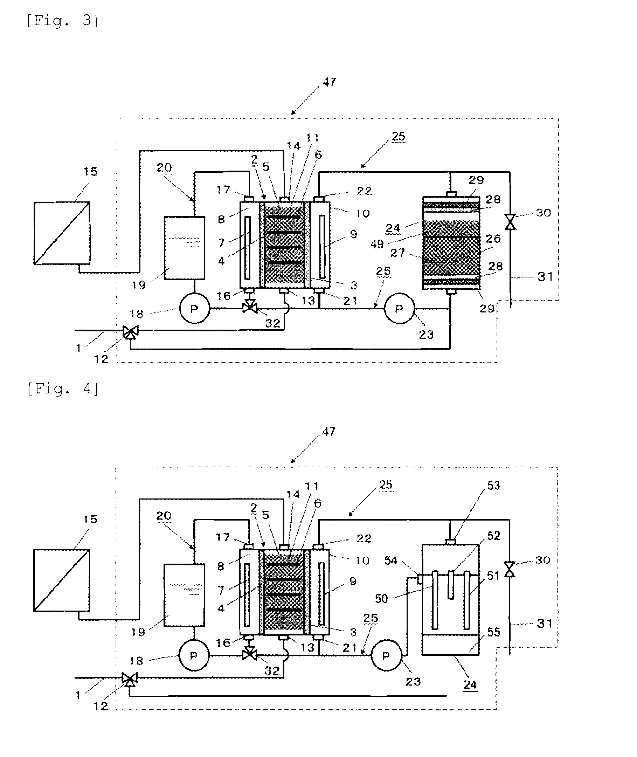

Fig. 3 is a diagram showing a configuration of a demineralizer according to a third embodiment of the invention.

The demineralizer 47 of the third embodiment is different from that of the first embodiment in that in the deposition/removal section 24 of the demineralizer 47, an alkaline elution agent 49 is provided as deposition accelerating means of hardness components on an upper portion of the filtering material 27 as the filter means.

According to the configuration, the hardness components in the cathode water sent to the deposition/removal section 24 are easily deposited as calcium carbonate by alkaline ingredient eluted from the alkaline elution agent 49 and therefore, the hardness components can be filtered by the filtering material 27.

Hydroxide such as calcium and magnesium or water glass that is granulated into a pellet form can be used as the alkaline elution agent 49. Hardness components are dissolved not in a form of calcium carbonate or calcium sulfate having low solubility but in a form of heavy calcium carbonate or magnesium bicarbonate having high solubility. Since an abundance ratio of the heavy carbonate ion is varied depending upon pH, deposition of the hardness components of the cathode water can be accelerated by alkalifying pH of concentrated water by the alkaline elution agent 49.

As described above, hardness components in the cathode water brought into the state where the hardness components can easily be deposited by the alkaline elution agent 49, the hardness components are removed by the deposition/removal section 24, and it is possible to prevent the diaphragm from being clogged. It is possible to utilize the cathode water repeatedly, and an amount of water used for regeneration can be reduced.

### [Fourth Embodiment]

Fig. 4 is a diagram showing a configuration of a demineralizer according to a fourth embodiment of the invention.

The demineralizer 47 of the fourth embodiment is different from that of the first embodiment in that the deposition/removal section 24 is provided with a hardness component depositing section.

That is, the deposition/removal section 24 includes a deposition electrode 50, a counter electrode 51 and a reference electrode 52 as the hardness component depositing sections, and also includes a voltage controller (not shown) for controlling voltage that is applied between the deposition electrode 50, the counter electrode 51 and the reference electrode 52. A cathode water inlet 53 is provided on an upper portion of the deposition/removal section 24, and a cathode water outlet 54 is provided on a side of the deposition/removal section 24.

A bottom portion 55 is detachably provided on a bottom of the deposition/removal section 24. Metal electrodes such as stainless and zinc can be used as the electrodes. Examples of shapes of the electrodes are flat plate, mesh and punching. As a shape of the electrode for depositing hardness components, a mesh shape having a large surface area and capable of maintaining a large deposition amount is preferable.

According to this configuration, cathode water in the cathode chamber 10 is supplied to the cathode water inlet 53 provided in the upper portion of the deposition/removal section 24 by the cathode water circulation pump 23. In the deposition/removal section 24, the reference electrode 52 is used as the ground, and potential of the deposition electrode 50 is made more negative than that of the counter electrode 51 by the voltage controller. By this voltage control, hardness components included in the cathode water adhere to the deposition electrode 50, and the hardness components are deposited and removed. Cathode water from which the hardness components are removed is circulated to the cathode chamber 10 from the cathode water outlet 54.

If the layer of the hardness components adhered to the deposition electrode 50 becomes thick, a portion of the adhered hardness components is peeled off from the deposition electrode 50, and the hardness components are deposited on the bottom portion 55 of the deposition/removal section 24. Since the bottom portion 55 can be detached, a user can remove the hardness components deposited on the bottom portion 55 by washing for example.

As described above, the deposition/removal section 24 includes the hardness component depositing section, hardness components are deposited on the hardness component depositing section by electrical tractional force, and hardness components in the cathode water can be removed.

In the demineralizer of the embodiment, the reference electrode 52 is used as the ground, and the potential of the deposition electrode 50 is made more negative than that of the counter electrode 51 by the voltage controller, whereby electrical tractional force is obtained and hardness components are deposited on the deposition electrode 50. However, the same effect as that of the embodiment can also be obtained by switching a polarity of applied voltage, hardness components are deposited on the deposition electrode 50 and the counter electrode 51 alternately by switching between the deposition electrode 50 and the counter electrode 51.

### [Fifth Embodiment]

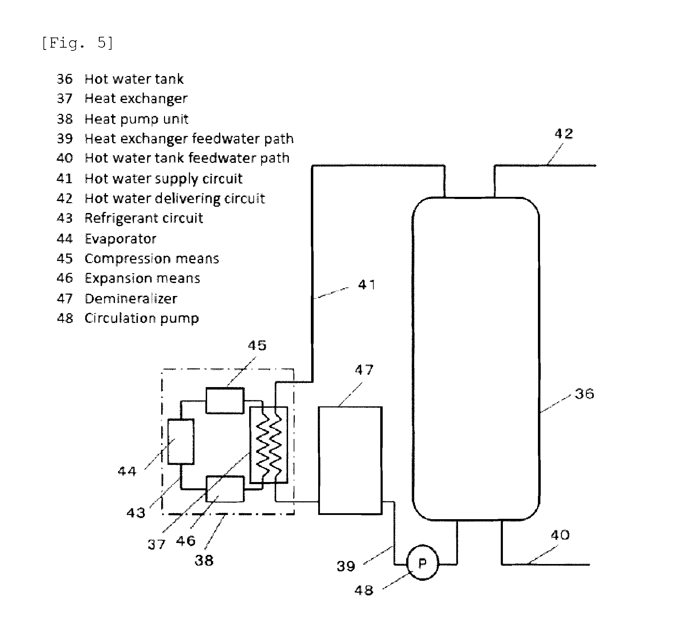

Fig. 5 is a diagram showing a configuration of a hot water supply apparatus having a demineralizer according to a fifth embodiment of the invention.

In Fig. 5, the hot water supply apparatus having the demineralizer of the fifth embodiment includes a hot water tank 36, a heat pump unit 38 having a heat exchanger 37, a heat exchanger feedwater path 39, a hot water tank feedwater path 40, a hot water supply circuit 41, a hot water delivering circuit 42 and the demineralizer 47. The heat pump unit 38 includes a refrigerant circuit 43 provided with a refrigerant therein. The refrigerant circuit 43 includes an evaporator 44 that collects atmospheric heat, a compression means 45, the heat exchanger 37 and expansion means 46. The heat exchanger feedwater path 39 and the hot water tank feedwater path 40 are connected to lower portions of the hot water tank 36, and the demineralizer 47 and a circulation pump 48 are provided on the side of the heat exchanger feedwater path 39.

In the above configuration, operation and effect thereof will be described. Operation at the time of softening water and regeneration in the demineralizer 47 are the same as those of the previous embodiments, and explanation thereof will be omitted.

In the heat pump unit 38, a refrigerant circulates through the refrigerant circuit 43, and the evaporator 44 takes heat from atmosphere. The refrigerant is compressed by the compression means 45 and a temperature of the refrigerant is increased to a high temperature. The high temperature refrigerant heats soft water sent from the heat exchanger feedwater path 39 by the heat exchanger 37. The refrigerant is sent to the evaporator 44 through the expansion means 46, and atmospheric heat is taken again.

Soft water that was supplied from the lower portion of the hot water tank 36 to the heat pump unit 38 through the heat exchanger feedwater path 39 and the demineralizer 47 by the circulation pump 48 is heated to a high temperature by the heat exchanger 37. The soft water that was heated to hot water is sent to the hot water tank 36 through the hot water supply circuit 41. When a user uses hot water in the hot water supply apparatus, hot water and water are mixed and its temperature is adjusted to an appropriate temperature by the hot water delivering circuit 42 provided on the upper portion of the hot water tank 36, and the hot water is supplied to a using place of the user (kitchen, lavatory, bath-room and the like). If hot water in the hot water tank 36 is used, water is replenished to the hot water tank 36 from the hot water tank feedwater path 40 provided at the lower portion of the hot water tank 36.

Generally, water is rapidly heated by the heat exchanger 37, calcium and magnesium included in the water adhere to a heat-transferring surface as a scale, and this deteriorates heat exchanging efficiency. In addition, there is an adverse possibility that this clogs a water circuit of the heat exchanger 37.

If soft water produced by the demineralizer 47 is supplied to the heat exchanger 37 as in the hot water supply apparatus of the embodiment, it is possible to suppress the generation of the scale formed on the heat transferring surface of the heat exchanger 37. By this configuration, it is possible to prevent the water circuit of the heat exchanger from being clogged, and to enhance the heat exchanging efficiency.

Further, if soft water is used for bathing or washing clothes and generation of residue of soap is suppressed, allergy can be suppressed and cosmetic effect can be obtained. If soft water is used as washing water used for washing a skin or hair, it is possible to make full use of these effects of the soft water. Generation of the residue of soap and adhesion of the scale are suppressed, labor of washing kitchen, lavatory, bath-room and the like can be reduced.

In the case of a hot water supply apparatus in which a conventional demineralizer is combined with a water heater that has a large water-using amount and that is disposed outdoor like the heat pump water heater, frequency of replenishment of salt and an amount of salt used are increased. This combined hot water supply apparatus is installed in a small space in an apartment, maintenance such as replenishment of salt is troublesome, and remedial maintenance is a problem. Hence, if the hot water supply apparatus having the demineralizer of the embodiment is used, it is unnecessary to use salt, and its replenishing labor can be reduced.

Since the hot water supply apparatus having the demineralizer of the embodiment includes the hot water tank 36, even if soft water can not be supplied while the ion exchanger 11 is regenerated in the demineralizer 47, it is possible to supply hot water that is softened to a user from the hot water tank 36. Therefore, the hot water supply apparatus does not impose an inconvenience on the user.

According to the demineralizer of the present invention, it is unnecessary to supply chemicals, and soft water is continuously supplied, and the demineralizer is effective for a hot water supply apparatus that uses soft water. The present invention can be applied to a washer, a dishwasher and a cooker in addition to the hot water supply apparatus.

## Claims

1. A demineralizer comprising: an electrodialysis section including an anode chamber having an anode, a cathode chamber having a cathode, and a soft water chamber which separates the anode chamber and the cathode chamber from each other by means of a diaphragm and into which ion exchanger is charged for obtaining soft water by the ion exchanger;
an anode water circulation channel including a water storage section in which anode water is stored and an anode water circulation pump, and the anode water circulation channel circulating the anode water concentrated in the anode chamber by energizing the anode; and
a cathode water circulation channel including a cathode water circulation pump and a deposition/removal section for depositing hardness components in the cathode water thereon to remove the hardness components, and the cathode water circulation channel circulating the cathode water concentrated in the cathode chamber by energizing the cathode.

2. The demineralizer according to claim 1, wherein the deposition/removal section includes reversely-water flowing means for circulating water reversely, and a filtering material charged into the deposition/removal section is stirred and washed when water flows reversely.

3. The demineralizer according to claim 2, wherein when the filtering material is stirred and washed, the filtering material is washed with the anode water in the water storage section.

4. The demineralizer according to claim 1, wherein an anion exchanger is charged into the soft water chamber on a side of the anode chamber and a cation exchanger is charged into the soft water chamber on a side of the cathode chamber in a state where the anion exchanger and the cation exchanger are separated from each other.

5. The demineralizer according to claim 1, wherein the ion exchanger is woven fabric, nonwoven fabric or processed goods thereof having an ion exchange group.

6. The demineralizer according to claim 1, wherein the ion exchanger is formed into nonwoven fabric made of fiber having an ion exchange group and conductive fiber.

7. The demineralizer according to claim 1, wherein the deposition/removal section includes filter means and deposition accelerating means of hardness components.

8. The demineralizer according to claim 1, wherein the deposition/removal section includes hardness component depositing section, and the hardness components are deposited on the hardness component depositing section.

9. A hot water supply apparatus comprising the demineralizer according to any one of claims 1 to 8.
